# FASCICULE DE BREVET EUROPEEN

(11) **EP 2 162 410 B1**
(45) Date de publication et mention de la délivrance du brevet: **11.05.2011**
(21) Numéro de dépôt: 08806051.2
(22) Date de dépôt: 20.06.2008
(51) Int. Cl.: C04B 28/06, C04B 40/06

(54) **SYSTEME BICOMPOSANT A BASE DE CIMENT ALUMINEUX RETARDE A DECLENCHEMENT INSTANTANE**
ZWEIKOMPONENTENSYSTEM MIT VERZÖGERTEM TONERDESCHMELZZEMENT MIT SOFORTIGER INITIIERUNG
DUAL COMPONENT SYSTEM CONTAINING RETARDED ALUMINOUS CEMENT WITH INSTANTANEOUS INITIATION

(30) Priorité: 28.06.2007 FR 0756116
(43) Date de publication de la demande: 17.03.2010
(73) Titulaire: KERNEOS, 92200 Neuilly-sur-Seine (FR)
(72) Inventeur: CHARPENTIER, Eric, F-38090 Villefontaine (FR); FRYDA, Hervé, F-38300 Meyrie (FR)
(74) Mandataire: Catherine, Alain
(86) Numéro de dépôt international: PCT/FR2008/051119
(87) Numéro de publication internationale: WO 2009/007576

(56) Documents cités:
- EP-A- 0 033 246
- EP-A- 0 081 385
- EP-A- 0 113 593
- EP-A- 0 241 230
- AU-B2- 662 425
- FR-A- 2 763 937
- JP-A- 10 273 357

## Description

La présente invention concerne un système bicomposant prêt à l'emploi comportant une partie A à base de ciment alumineux et une partie B comprenant un déclencheur à base de lithium. Le système durcit en moins de 5 minutes par mélange des deux parties. Plus particulièrement, l'invention concerne un système bicomposant composé de deux parties, A et B, de nature minérale et non corrosives, en phase aqueuse et stable individuellement durant au moins 6 mois. L'invention concerne également une capsule bicomposant. Enfin, l'invention s'applique tout particulièrement aux applications où l'on recherche un collage ou un scellement de matériaux.

Il existe de nombreux systèmes bicomposants, chacun des composants étant destiné à être mélangé pour initier la réaction de durcissement. Lorsque l'on recherche un durcissement très rapide, notamment dès 5 minutes, on utilise généralement des résines organiques réticulables, conservées en suspension dans un solvant non aqueux, et qui sont mélangées à un catalyseur au moment de l'application. C'est notamment le cas des colles époxydiques et des mortiers de scellement à base de polyester. Ces systèmes présentent cependant les inconvénients d'être polluants, de coûter cher et éventuellement d'être dangereux pour les applicateurs.

Afin de pallier ces inconvénients des systèmes partiellement ou à majeure partie minérale ont été développés.

Les brevets EP 0241 230 et EP 0 113 593 et le certificat d'utilité français FR 2763937 divulguent des systèmes bicomposants comportant une partie A à base de ciment alumineux en phase aqueuse retardé plusieurs mois par de l'acide borique ou l'un de ses sels en suspension dans l'eau et une partie B destinée à initier le durcissement. La partie B comporte un matériau susceptible de « débloquer » le ciment alumineux retardé et un catalyseur permettant d'accélérer la prise du ciment.

Le certificat d'utilité français N°2763937 préconise l'emploi de 3 à 33 % en poids de chaux hydratée dans la partie B et l'utilisation comme catalyseur d'un sel de lithium. Ce document n'apporte aucune indication sur le type de sel de lithium ou sur les quantités nécessaires. En outre aucun exemple précis de composition, ni de propriété n'est décrit.

Les brevets EP 0241 230 et EP 0113593 permettent d'obtenir des durcissements très rapides, avec des temps de début de prise inférieurs à 5 minutes et une résistance mécanique à la compression à 30 minutes entre 2 et 18 MPa selon les exemples cités. Par contre la partie B contient des teneurs élevées en éléments chimiques corrosifs comme la chaux ou l'hydroxyde de lithium, ce qui confère un caractère dangereux pour la manipulation. Ces brevets divulguent en effet l'utilisation comme catalyseur d'un sel de lithium choisi parmi le sulfate, le carbonate ou l'hydroxyde de lithium. Tous les exemples divulgués dans ces documents comportent tous environ 50% de chaux comme matériau débloquant dans la partie B. Parmi les sels de lithium, seul l'hydroxyde de lithium est exemplifié comme catalyseur, utilisé à des proportions d'au moins 3,9 % en poids de la partie B dans les exemples cités.

La demande de brevet EP 0081385 divulgue également un système bicomposant comportant une partie A à base de ciment alumineux en phase aqueuse et une partie B destinée à déclencher le durcissement. La prise de la partie A peut être retardée pendant des durées supérieures à six mois grâce à l'utilisation d'un inhibiteur de prise pouvant être de l'acide borique. La partie B comprend un déclencheur ou une combinaison de déclencheur. Parmi la liste de déclencheur cité, figurent des sels de lithium, notamment l'hydroxyde, le sulfate et le carbonate de lithium. La partie B peut être sous forme d'une suspension aqueuse.

Tous les exemples mettant en oeuvre un sel de lithium comprennent en outre un autre déclencheur tel que du gypse, de la chaux hydratée ou du carbonate de calcium. Cet autre déclencheur étant majoritairement présent dans la partie B.

Dans les exemples cités, la première échéance de durcissement est de 4 heures ou plus, ce qui ne permet pas de conclure à une prise rapide dans les premières minutes d'un tel système. Seul l'exemple 8 cite un durcissement à 30 minutes, mais ceci avec incorporation d'une quantité importante de composé de type chaux hydratée dans la partie B ce qui engendre un inconvénient supplémentaire lié à la nocivité de ce type de produit et donc aux risques encourus lors de la manipulation de ces systèmes.

Par conséquent, il existe un besoin d'un système bicomposant minéral aussi efficace que les systèmes bicomposants à base de résine organique mais ne comportant pas l'inconvénient d'être nocif pour l'environnement et/ou dangereux vis-à-vis des personnes qui les manipulent.

On entend par « système aussi efficace » un système présentant les propriétés suivantes :
- une durée de vie élevée, c'est-à-dire d'au moins un mois, mieux de deux mois ou plus et idéalement d'au moins 6 mois, afin de se garantir contre les délais de stockage ou de livraison,
- un déclenchement instantané avec un temps de début de prise inférieur à 5 minutes après le mélange des deux parties,
- de bonnes propriétés de résistance mécanique, typiquement une résistance en compression d'au moins 5 MPa à l'échéance de 15 minutes,
- une non-toxicité vis-à-vis des personnes devant manipuler le système,
- un système non polluant.

On entend par « durée de vie » au sens de l'invention, la durée pendant laquelle un composant reste sous la forme d'une suspension aqueuse de produits solides plus ou moins fluide, pouvant revenir à l'état de suspension aqueuse par une simple agitation mécanique, sans faire prise.

Les problèmes ci-dessus sont résolus selon l'invention par un système bicomposant comprenant une partie A à base de ciment alumineux en phase aqueuse retardé et une partie B en phase aqueuse destinée à initier le durcissement, la partie A comprenant en outre de l'acide borique ou l'un de ses sels, au moins un superplastifiant et de l'eau et la partie B comprenant un déclencheur et de l'eau et satisfaisant les conditions suivantes :
a) le déclencheur est constitué uniquement de sels de lithium et comprend un mélange d'hydroxyde de lithium et d'au moins un autre sel de lithium soluble dans l'eau, de préférence un sulfate ou un carbonate de lithium,
b) la masse totale d'élément lithium (Li) dans la partie B est telle qu'après mélange avec la partie A, elle est comprise entre 0,5 % et 2 % en poids par rapport au poids de ciment alumineux dans la partie A, de préférence entre 0,8 % et 1,3 %, et
c) la masse de l'élément lithium (Li) dans la partie B apportée par l'hydroxyde de lithium est telle qu'après mélange avec la partie A elle est comprise entre 0, 1 % et 1% en poids par rapport au poids de ciment alumineux de la partie A, de préférence entre 0,15% et 0,4%.

Dans la présente demande, on appelle « ciment alumineux » un liant hydraulique dont la teneur en alumine est comprise entre 30 et 80 % par rapport au poids total du liant.

De préférence, les parties A et B comportent en outre des charges minérales.

Les parties A et B ont un aspect pâteux à fluide selon leur composition.

Le produit obtenu par mélange des parties A et B a un temps de début de prise inférieur à 5 minutes et atteint une résistance mécanique en compression d'au moins 5 MPa en 15 minutes et de préférence de 10 MPa en 15 minutes.

L'association de l'hydroxyde de lithium et d'au moins un autre sel de lithium soluble dans l'eau, dans les proportions choisies, permet à la fois de «débloquer » le ciment alumineux et d'accélérer le durcissement du mélange de façon synergique et ce en l'absence de chaux ou d'autre déclencheur.

Cette association particulière d'hydroxyde de lithium et d'au moins un autre sel de lithium soluble dans l'eau démontre un effet surprenant.

En effet, lorsque l'on supprime complètement l'hydroxyde de lithium, le temps de début de prise devient supérieur à 5 minutes et on perd la capacité à développer une résistance mécanique dans les 15 premières minutes. Par contre, un excès d'hydroxyde de lithium induit une perte de résistance mécanique aussi bien à court terme (15 à 30 minutes) qu'à plus long terme (plusieurs jours). Un tel effet négatif sur la résistance mécanique est également observé en ajoutant de l'hydroxyde de sodium.

Il est donc nécessaire d'avoir une proportion minimale d'hydroxyde de lithium afin d'obtenir un déclenchement instantané. Cette quantité permet de neutraliser l'acide borique en excès et donc de débloquer l'hydratation du ciment alumineux.

Sans être lié par aucune théorie, on pense que cet effet négatif peut être attribué à un blocage de l'hydratation des particules de ciment par formation rapide d'un gel basique sur leur surface.

Par contre, au-delà de la dose minimale d'hydroxyde de lithium introduite pour débloquer le ciment alumineux, on a intérêt à augmenter la quantité d'ions lithium de façon à augmenter le nombre de sites de nucléation pour la formation des hydrates, ces ions pouvant être apportés par d'autres sels de lithium tels que le sulfate ou le carbonate. Mais là encore, il y a une limite à ne pas dépasser sous peine d'effet négatif sur la résistance mécanique. Cet effet négatif peut être attribué à une modification de la microstructure par le trop grand nombre de germes.

Par conséquent, on obtient les résultats avantageux de l'invention seulement en respectant à la fois une plage de concentration en hydroxyde de lithium et une valeur maximale en lithium total particulières. En effet, en utilisant la combinaison spécifique d'hydroxyde de lithium et d'au moins un autre sel de lithium soluble dans l'eau, on contrôle les quantités d'hydroxyde de lithium tout en maintenant une quantité de lithium suffisamment élevée pour permettre d'accélérer efficacement le durcissement du système. Ainsi, on obtient un système se déclenchant instantanément tout en conservant à plus long terme une résistance élevée.

On entend par « déclenchement instantané » au sens de l'invention, l'obtention après mélange des deux parties A et B d'un début de prise mesuré par la méthode de l'aiguille Vicat inférieur à 5 minutes. Le début de prise est déterminé par l'instant où l'aiguille de Vicat, aiguille de 1 mm² de section pesant 300 g, ne s'enfonce plus jusqu'au fond d'une pastille de pâte constituée du mélange A+B. Les modalités de la mesure du temps de début de prise font l'objet de la norme NF EN 196-3.

On estime que le système présente de bonnes propriétés de résistance lorsque l'on obtient une résistance mécanique en compression d'au moins 5 MPa en 15 minutes, mesuré selon la norme NF EN 196-1.

Par conséquent, le système bicomposant objet de l'invention permet d'obtenir, pour des applications semblables, des vitesses de durcissement comparables à celle des systèmes organiques cités plus haut, mais sa composition essentiellement minérale le rend beaucoup moins toxique et très peu polluant vis à vis de l'environnement. De plus ses performances sont obtenues pour un coût inférieur à celui des systèmes organiques utilisés dans l'art antérieur.

De manière générale, le système bicomposant de l'invention apparaît donc comme une alternative à la fois économique et écologique à toutes applications mettant en oeuvre une pâte ou un liquide prêt à l'emploi qui fait prise en moins de 5 minutes par mélange avec un déclencheur. On peut citer à titre d'exemples les systèmes d'ancrages ou de scellement.

De plus, il s'est avéré de manière plus surprenante encore que dans le système de l'invention, on obtient en terme de résistance et de déclenchement les meilleurs résultats, soit une efficacité optimale, pour une quantité en hydroxyde de lithium dans la partie B inférieure à 1% en poids par rapport au poids total de la partie B. Or, si l'hydroxyde de lithium est lui-même corrosif, c'est-à-dire qu'il provoque des brûlures chimiques au contact de la peau ou des yeux, la corrosivité d'une composition comprenant de l'hydroxyde de lithium décroît avec sa teneur. Ainsi, selon la directive Européenne 1999/45, une préparation est corrosive si elle contient plus de 5% d'hydroxyde, irritante entre 1% et 5% et sans risque à moins de 1 %.

Par conséquent, le système bicomposant de l'invention a pour avantage supplémentaire de n'être pas dangereux pour la santé des personnes le manipulant ou tout au moins beaucoup moins dangereux que les autres systèmes bicomposants minéraux existants. A titre de comparaison, on peut citer les systèmes décrits dans le brevet EP 0241 230 dont la partie B comporte 53,1% de chaux hydratée et 6,6 % d'hydroxyde de lithium. Ces systèmes sont donc particulièrement corrosifs de par les proportions importantes de chaux et d'hydroxyde de lithium.

L'invention permet donc d'obtenir un système bicomposant dont la durée de vie est supérieure à six mois pouvant être déclenché instantanément.

Dans un mode de réalisation avantageux, l'invention possède en outre les caractéristiques suivantes seules ou en combinaison.

Les parties A et B ont des compositions en poids telles que décrites ci-dessous.
Partie A :
   - 60% à 80% en poids de ciment alumineux
   - 1 à 3% en poids d'acide borique ou l'un de ses sels
   - 5% à 10% en poids de charges minérales
   - 1 à 5 % en poids de superplastifiant
   - 13 à 18% en poids d'eau
Partie B :
   - 2,5 à 6,5% en poids de sulfate de lithium anhydre (Li₂SO₄)
   - 0,4 à 1 % en poids d'hydroxyde de lithium anhydre (LiOH)
   - 75 à 90 % en poids de charges minérales
   - 5 à 15% en poids d'eau

Le rapport en poids entre la partie A et la partie B (A/B) est préférentiellement compris entre 2/1 et 1/2. De préférence, la composition du mélange comprend 50 % en poids de partie A et 50 % en poids de partie B.

Selon un mode de réalisation préféré, le ciment alumineux compris dans la partie A est retardé par de l'acide borique ou l'un de ses sels présent à une teneur comprise entre 1 à 3%, de préférence entre 1 à 2,3 %, et mieux encore de 2 % en poids par rapport au poids total de ciment alumineux. On utilise de préférence l'acide borique.

La présence d'un superplastifiant, composé organique, à des proportions inférieures ou égale à 5% ne change pas la nature fondamentalement minérale du système de l'invention. De manière préférée, le système bicomposant selon l'invention comprend donc au plus 5 % en poids de composé organique. Les superplastifiants sont de préférence choisis dans la famille des polyphosphonate polyox et des polycarboxylates polyox PCP, et leurs mélanges. Les superplastifiants de type polycarboxylate polyox sont des composés connus et notamment décrit dans les brevets US20030127026 et US20040149174. Les polyphosphonate polyox sont notamment décrits dans les brevets FR-A-2810314 et FR-A-2696736 ainsi que FR-A-2689895. Ces superplastifiants sont des produits disponibles dans le commerce.

De préférence, la proportion d'hydroxyde de lithium dans la partie B est inférieure à 1 % en poids.

Selon un mode de réalisation avantageux, les parties A et B sont sous forme de pâte. Le caractère pâteux limite le risque de coulure lors du mélange des deux parties et donc, de ce fait, le risque de contact ou de projection sur les personnes les manipulant. Par conséquent, le caractère peu corrosif des parties A et B et la consistance du système bicomposant de l'invention contribuent tous deux à son innocuité.

Les charges minérales peuvent être par exemple choisies parmi la fumée de silice, le laitier de haut fourneau, les cendres volantes, les fillers calcaires, les sables, les gravillons, les graviers et/ou les cailloux.

Préférentiellement, les charges minérales des parties A et B sont choisies de façon à obtenir une granulométrie complémentaire à celle du ciment alumineux. La granulométrie du ciment alumineux dépend de sa finesse, mais on peut considérer en général que le passant à 5 microns est inférieur à 40% et que le passant à 100 microns est supérieur à 90%. Les charges de la partie A sont choisies de préférence de façon à avoir une granulométrie inférieure à celle du ciment, c'est-à-dire avec un diamètre maximal de particule inférieur à 5 microns. Les charges de la partie A sont préférentiellement choisies parmi la fumée de silice ou/et un filler satisfaisant à la contrainte de taille de particule. Les charges minérales de la partie B sont choisies préférentiellement de manière à avoir une granulométrie supérieure à celle du ciment, c'est-à-dire qu'au moins 80% en poids des particules de charge ont un diamètre minimal de particule égal ou supérieur à 100 microns, le diamètre maximal dépendant de l'application visée.

Par exemple, pour des applications de type système d'ancrage, les charges minérales ont de préférence un diamètre maximal (Dmax) d'au plus 1 mm.

Les proportions d'eau dans les deux parties sont choisies de sorte que le rapport pondéral eau sur ciment alumineux (E/CAC) dans le produit obtenu par mélange des parties A et B soit inférieur à 0,65, de préférence inférieur 0,4.

Selon un mode de réalisation préférentiel, les parties A et B sont exemptes de chaux, d'hydroxyde de sodium ou de tout autre produit corrosif autre que l'hydroxyde de lithium.

De préférence, le produit obtenu par mélange des parties A et B a un pH supérieur à 12.

Dans le système bicomposant de l'invention seule la partie A est susceptible de faire prise, les composants de la partie B ne pouvant réagir ensemble. Par conséquent, la durée de vie du système bicomposant de l'invention sera uniquement dépendante de la durée de vie de la partie A. De préférence, les parties A et B du système bicomposant selon l'invention ont une durée de vie d'au moins six mois.

L'invention a également pour objet une capsule bicomposant comprenant une partie A à base de ciment alumineux retardé et une partie B destinée à initier le durcissement. Les parties A et B sont telles que définies ci-dessus.

Enfin, l'invention concerne l'utilisation du système bicomposant comme matériau de scellement ou comme matériau pour réaliser des travaux de collage.

Selon un mode de réalisation préféré, le retardeur de prise utilisé dans la partie A de l'invention est l'acide borique et/ou un sel de l'acide borique. Les sels de l'acide borique peuvent être choisis parmi le borate de zinc, le borate de sodium et leurs mélanges. On utilise cependant préférentiellement l'acide borique.

Le retardeur peut être présent à des teneurs comprises entre 1 à 3 % en poids par rapport au poids total du ciment alumineux. On considère que pour obtenir une durée de vie d'au moins six mois de la partie A, il faut environ de 1 à 2 % de retardeur par rapport au poids de ciment alumineux. Il semble que de l'ajout l'acide borique ou d'un dérivé permet, via la formation) de borate de calcium, de limiter fortement la solubilisation du ou des aluminates de calcium dans l'eau. L'hydratation du ciment qui mène au durcissement du mélange est donc provisoirement stoppée par l'ajout du dérivé de l'acide borique.

Lorsque le déclencheur, constitué du mélange selon l'invention d'hydroxyde de lithium et d'au moins un autre sel de lithium soluble dans l'eau, est mélangé à la partie A comprenant le ciment alumineux, le pH du milieu augmente, rendant inopérant le retardeur de prise du ciment alumineux. La réaction d'hydratation des aluminates de calcium est ainsi débloquée. Cette réaction d'hydratation semble fortement catalysée par le lithium. Grâce à l'action combinée d'hydroxyde de lithium et d'au moins un autre sel de lithium soluble dans l'eau on obtient donc à la fois une prise instantanée ainsi qu'un maintien de bonnes propriétés mécaniques. Le fait de coupler l'hydroxyde de lithium à un sel de lithium de type sulfonate ou carbonate permet d'assurer la présence de quantités importantes de lithium et d'amorcer ainsi la nucléation et la précipitation massive de l'ensemble du système.

Selon un mode de réalisation, la partie A et la partie B se présentent sous forme d'une pâte dans laquelle les composants et les charges minérales sont maintenus en suspension stable et homogène grâce à la faible présence d'eau.

Le rôle des charges minérales est d'ajuster les performances finales et rendre le système économiquement compétitif. En effet, en optimisant la granulométrie, on peut minimiser l'eau nécessaire et plus particulièrement le rapport eau/ciment alumineux. Ainsi, on favorise encore davantage l'accélération de la vitesse de prise.

Le choix de la fumée de silice permet de minimiser encore davantage le rapport pondéral eau/CAC.

Par « fumée de silice » on entend, au sens de la présente invention, de la silice sous forme de poudre dont les particules ont une taille micrométrique ou nanométrique.

En effet, la granulométrie plus fine des particules de fumée de silice et probablement leur forme sphérique permet de diminuer la proportion d'eau avant de subir de la dilatance. La dilatance correspond à une forte augmentation de la viscosité au malaxage.

Un système bicomposant optimal est obtenu en combinant les caractéristiques suivantes :
- l'utilisation d'hydroxyde de lithium et d'au moins un autre sel de lithium soluble dans l'eau, de préférence un sulfate ou un carbonate de lithium, dans des proportions spécifiques pour obtenir un début de prise inférieur à 5 minutes et maintenir de bonnes propriétés mécaniques à plus long terme,
- l'optimisation de la granulométrie par le choix de charges minérales ayant une granulométrie complémentaire à celle du ciment alumineux, avec notamment la présence de fumée de silice dans la partie A,
- le choix d'un Dmax pour les charges minérales de 1 mm,
- la répartition spécifique des charges dans les parties A et B.

Dans un mode avantageux de réalisation de l'invention, le système bicomposant est utilisé dans la fabrication de capsules d'ancrage.

Grâce à l'invention, il est ainsi possible de développer une solution ultra rapide pour l'application de capsule d'ancrage dans la mine. Les capsules d'ancrages sont destinées à être insérées dans un trou creusé dans la roche au « plafond » d'une galerie fraîchement creusée. Ces capsules sont composées de deux compartiments étanches comprenant la partie A à base de ciment alumineux et la partie B comprenant le déclencheur. Après avoir inséré la capsule dans le trou, on y insère par rotation une tige métallique. Cette tige déchire les compartiments de la capsule et permet le mélange des deux parties. Il se produit un début de durcissement qui permet de solidariser la tige à la roche. Un boulon en bout de tige est alors serré de façon à comprimer la roche. Cette compression permet de sécuriser la galerie et de continuer les travaux.

La présente invention s'accorde parfaitement avec les exigences requises pour les systèmes d'ancrage de par les avantages suivants :
- une durée de vie de la capsule au moins 6 mois à 20°C
- un temps de début de prise inférieur à 5 minutes et une résistance en compression de 15 MPa 15 minutes après mélange des deux compartiments.
- un comportement « thixotrope » du mélange, c'est-à-dire que le mélange est suffisamment fluide pour bien enrober la barre métallique lors de la rotation de celle-ci, mais avec un seuil d'écoulement à l'arrêt de façon à éviter des fuites.
- l'absence de produits corrosifs pour la peau et les yeux.

Les capsules existantes sont à base de résine acryliques coûteuses. L'intérêt de développer une capsule essentiellement minérale à base de ciment alumineux permet une réduction significative du coût.

La partie A peut être préparée de la façon suivante. Le sel de l'acide borique ou l'acide borique est ajouté à l'eau et mélangé pendant au moins 15 minutes. Le ciment et les charges minérales sont ensuite ajoutés et le mélange poursuivi pendant 15 autres minutes.

La partie B peut être préparée en mélangeant simplement les différents constituants composant cette partie.

L'exemple suivant illustre l'invention sans la limiter.

### EXEMPLE :

Les proportions données sont en poids.

On prépare la partie A en mélangeant les constituants suivants.

### Composition partie A :

| | |
|---|---|
| Eau : | 15,24% |
| Acide borique : | 1,45% |
| OP 200 : | 0,99% |
| P 180 : | 1,98% |
| Ternal HR® : | 72,60% |
| FS RW Fuller®: | 7,74% |

Le produit Ternal HR® est un ciment alumineux commercialisé par la société KERNEOS.

Les produits PREMIA 180® (P 180) et OPTIMA 200® (OP 200) sont deux superplastifiants commercialisés par la société CHRYSO.

Le produit FS RW Fuller est de la fumée de silice commercialisée par RW silicium GmbH.

Le protocole de mélange est le suivant :
- peser la quantité d'eau nécessaire et introduire l'eau dans une cuve de mélange,
- ajouter l'acide borique lentement tout en agitant,
- continuer à mélanger à vitesse réduite pendant 25 minutes jusqu'à dissolution de l'acide borique,
- ajouter le superplastifiant et mélanger à la même vitesse pendant 2 minutes,
- ajouter la moitié de la masse de CAC pesée soigneusement et mélanger jusqu'à ce que le CAC soit complètement incorporé, puis ajouter le CAC restant selon le même protocole,
- procéder de la même manière avec la fumée de silice,
- continuer de mélanger à vitesse réduite pendant 2 minutes puis augmenter la vitesse de mélange et mélanger pendant 2 minutes.

On prépare la partie B en mélangeant les constituants suivants :

### Composition partie B :

| | |
|---|---|
| Eau : | 11,61% |
| Li₂SO₄ : | 4,04% |
| LiOH anhydre : | 0,62% |
| Sable Palvadeau 0,315 -1mm : | 42,90% |
| Durcal 130® : | 40,83% |

Le Durcal 130® est un filler calcaire commercialisé par la société OMYA.

Le protocole de mélange est le suivant :
- peser la quantité d'eau nécessaire,
- ajouter le sulfate de lithium à l'eau et agiter avec un agitateur magnétique jusqu'à ce que tout soit dissous,
- ajouter l'hydroxyde de lithium dans la solution et agiter avec un agitateur magnétique jusqu'à ce que tout soit dissous,
- mélangez les matériaux secs (sable et Durcal 130 de Palvadeau) pendant 5 - 10 minutes à vitesse réduite dans un malaxeur planétaire,
- ajouter la solution de sels de lithium et mélanger à vitesse réduite pendant 10 minutes puis augmenter la vitesse et mélanger pendant 5 minutes,
- vérifier l'homogénéité du mélange (particulièrement au fond du récipient) et, si le mélange n'est pas homogène, mélanger de nouveau pendant 2 minutes à vitesse élevée.

On mélange la partie A (56%) avec la partie B (44%) en malaxant 30 secondes avec un malaxeur. Les caractéristiques du mélange obtenu sont les suivantes :
• Début de prise à l'aiguille Vicat < 5 minutes
• Résistance à la compression mesurée sur éprouvettes prismatiques 20*20*100 mm mises en place sous vibration :

| Temps (minutes) | Résistance à la compression (MPa) |
|---|---|
| 10 | 8 |
| 18,3 | 17,2 |
| 32,9 | 20,6 |
| 46,3 | 21,5 |
| 121,5 | 25,5 |
| 1 jour | 35,9 |
| 7 jours | 50,49 |

Cet exemple illustre clairement que les systèmes selon l'invention font prises en moins de 5 minutes et que dès 10 minutes, la résistance en compression est de 8 MPa. Le système selon l'invention permet bien d'obtenir une résistance en compression d'environ 15MPA en 15 minutes.

## Revendications

1. Système bicomposant comprenant une partie A à base de ciment alumineux en phase aqueuse retardé et une partie B en phase aqueuse destinée à initier le durcissement, la partie A comprenant en outre de l'acide borique ou l'un de ses sels, au moins un superplastifiant et de l'eau et la partie B comprenant un déclencheur et de l'eau, **caractérisé en ce que** :
a) le déclencheur est constitué uniquement de sels de lithium et comprend un mélange d'hydroxyde de lithium et d'au moins un autre sel de lithium soluble dans l'eau, de préférence un sulfate ou un carbonate de lithium,
b) la masse totale d'élément lithium (Li) dans la partie B est telle qu'après mélange avec la partie A, elle est comprise entre 0,5 % et 2 % en poids par rapport au poids de ciment alumineux dans la partie A, de préférence entre 0,8 % et 1,3 %, et
c) la masse de l'élément lithium (Li) dans la partie B apportée par l'hydroxyde de lithium est telle qu'après mélange avec la partie A elle est comprise entre 0,1 % et 1% en poids par rapport au poids de ciment alumineux de la partie A, de préférence entre 0,15% et 0,4%.

2. Système bicomposant selon la revendication 1 **caractérisé en ce que** les parties A et B comportent en outre des charges minérales.

3. Système bicomposant selon la revendication 1 ou 2 **caractérisé en ce que** l'on obtient après mélange des deux parties un début de prise mesuré par la méthode de l'aiguille de Vicat inférieur à 5 minutes.

4. Système bicomposant selon l'une quelconque des revendications précédentes **caractérisé en ce que** le produit obtenu par mélange des parties A et B atteint une résistance mécanique en compression d'au moins 5 MPa en 15 minutes et de préférence d'au moins 10 MPa en 15 minutes.

5. Système bicomposant selon l'une quelconque des revendications précédentes **caractérisé en ce que** la composition en poids de la partie A est la suivante :
- 60% à 80% en poids de ciment alumineux,
- 1 à 3% en poids d'acide borique ou l'un de ses sels,
- 5% à 10% en poids de charges minérales,
- 1 à 5 % en poids de superplastifiant,
- 13 à 18% en poids d'eau.

6. Système bicomposant selon l'une quelconque des revendications précédentes **caractérisé en ce que** la composition en poids de la partie B est la suivante :
- 2,5 à 6,5% en poids de sulfate de lithium anhydre (Li₂SO₄),
- 0,4 à 1% en poids d'hydroxyde de lithium anhydre (LiOH),
- 75 à 90 % en poids de charges minérales,
- 5 à 15% en poids d'eau.

7. Système bicomposant selon l'une quelconque des revendications précédentes **caractérisé en ce que** le rapport en poids entre la partie A et la partie B (A/B) est compris entre 2/1 et 1/2, de préférence 1/1.

8. Système bicomposant selon l'une quelconque des revendications précédentes **caractérisé en ce que** l'acide borique ou l'un de ses sels est présent à une teneur comprise entre 1 à 3 %, de préférence entre 1 à 2,3 %, et mieux encore de 2 % en poids par rapport au poids total de ciment alumineux.

9. Système bicomposant selon l'une quelconque des revendications précédentes **caractérisé en ce que** le système bicomposant comprend au plus 5 % en poids de composé organique.

10. Système bicomposant selon l'une quelconque des revendications précédentes **caractérisé en ce que** la proportion d'hydroxyde de lithium dans la partie B est inférieure à 1 % en poids.

11. Système bicomposant selon l'une quelconque des revendications précédentes **caractérisé en ce que** les parties A et B sont sous forme de pâte.

12. Système bicomposant selon l'une quelconque des revendications précédentes **caractérisé en ce que** les charges de la partie A ont un diamètre maximal de particule inférieur à 5 microns, et au moins 80% en poids des particules de charge de la partie B ont un diamètre minimal de particule égal ou supérieur à 100 microns.

13. Système bicomposant selon l'une quelconque des revendications précédentes **caractérisé en ce que** les charges des parties A sont choisies parmi la fumée de silice ou/et un filler.

14. Système bicomposant selon l'une quelconque des revendications précédentes **caractérisé en ce que** les charges de la partie A et B ont un diamètre maximal (Dmax) de 1 mm.

15. Système bicomposant selon l'une quelconque des revendications précédentes **caractérisé en ce que** les proportions d'eau dans les deux parties sont choisies de sorte que le rapport pondéral eau sur ciment alumineux (E/CAC) dans le produit obtenu par mélange des parties A et B soit inférieur à 0,65, de préférence inférieur à 0,4.

16. Système bicomposant selon l'une quelconque des revendications précédentes **caractérisé en ce que** le pH du produit obtenu par mélange des parties A et B est supérieur à 12.

17. Système bicomposant selon l'une quelconque des revendications précédentes **caractérisé en ce que** les parties A et B ont une durée de vie d'au moins six mois.

18. Capsule bicomposant comprenant une partie A à base de ciment alumineux retardé et une partie B destinée à initier le durcissement **caractérisé en ce que** les parties A et B sont telles que définies dans les revendications 1 à 17.

19. Utilisation d'un système bicomposant tel que défini dans les revendications 1 à 17 comme matériau de scellement.

20. Utilisation d'un système bicomposant tel que défini dans les revendications 1 à 17 pour réaliser des travaux de collage.

## Claims

1. Dual-component system comprising a part A based on retarded aqueous-phase aluminous cement and a part B in aqueous-phase for initiating the curing process, part A further including boric acid or a salt thereof, at least one superplasticizer and water and part B including an initiator and water, **characterized in that**:
a) the initiator is only made of lithium salts and comprises a mixture of lithium hydroxide and at least one other water-soluble lithium salt, preferably a lithium sulphate or carbonate,
b) the total weight of lithium element (Li) in part B is such that, after mixing with part A, it ranges from 0.5 wt % to 2 wt % based on the weight of aluminous cement in part A, preferably from 0.8 wt % to 1.3 wt %, and
c) the weight of the lithium element (Li) in part B provided by the lithium hydroxide is such that, after mixing with part A, it ranges from 0.1 wt % to 1 wt % based on the weight of aluminous cement in part A, preferably from 0.15 wt % to 0.4 wt %.

2. Dual-component system according to claim 1, **characterized in that** parts A and B further comprise mineral fillers.

3. Dual-component system according to claim 1 or 2, **characterized in that**, after mixing of the two parts A and B, an initial-set time shorter than 5 minutes is obtained, as measured by the Vicat-needle method.

4. Dual-component system according to any one of the preceding claims, **characterized in that** the product obtained by mixing parts A and B reaches a mechanical compressive strength of at least 5 MPa within 15 minutes, and preferably of 10 MPa within 15 minutes.

5. Dual-component system according to any one of the preceding claims, **characterized in that** the weight composition of part A is as follows:
- 60 to 80 wt % of aluminous cement,
- 1 to 3 wt % of boric acid or a salt thereof,
- 5 to 10 wt % of mineral fillers,
- 1 to 5 wt % of superplasticizer,
- 13 to 18 wt % of water.

6. Dual-component system according to any one of the preceding claims, **characterized in that** the weight composition of part B is as follows:
- 2.5 to 6.5 wt % of anhydrous lithium sulfate (Lí₂SO₄),
- 0.4 to 1 wt % of anhydrous lithium hydroxide (LiOH),
- 75 to 90 wt % of mineral fillers,
- 5 to 15 wt % of water.

7. Dual-component system according to any one of the preceding claims, **characterized in that** the weight ratio between part A and part B (A/B) is comprised between 2/1 and 1/2, preferably 1/1.

8. Dual-component system according to any one of the preceding claims, **characterized in that** boric acid or a salt thereof is present in a content of 1 to 3 %, preferably 1 to 2.3 %, and even better of 2 wt % based on the total weight of aluminous cement.

9. Dual-component system according to any one of the preceding claims, **characterized in that** the dual-component system comprises at most 5 wt % of an organic compound.

10. Dual-component system according to any one of the preceding claims, **characterized in that** the proportion of lithium hydroxide into part B is lower than 1 wt %.

11. Dual-component system according to any one of the preceding claims, **characterized in that** parts A and B are in paste form.

12. Dual-component system according to any one of the preceding claims, **characterized in that** the fillers of part A have a maximum diameter of particle smaller than 5 µm, and at least 80 wt % of the filler particles of part B have a minimal diameter of particle equal to or greater than 100 µm.

13. Dual-component system according to any one of the preceding claims, **characterized in that** the fillers of part A are chosen among silica smoke and/or a filler.

14. Dual-component system according to any one of the preceding claims, **characterized in that** the fillers of parts A and B have a maximum diameter (Dmax) of 1 mm.

15. Dual-component system according to any one of the preceding claims, **characterized in that** the proportions of water in the two parts are chosen so that the water to aluminous cement weight ratio (E/CAC) in the product obtained by mixing parts A and B is lower than 0.65, preferably lower than 0.4.

16. Dual-component system according to any one of the preceding claims, **characterized in that** the pH of the product obtained by mixing parts A and B is higher than 12.

17. Dual-component system according to any one of the preceding claims, **characterized in that** parts A and B have a shelf life of at least six months.

18. Dual-component capsule comprising a part A based on retarded aluminous cement and a part B for initiating the curing process, **characterized in that** parts A and B are such as defined in claims 1 to 17.

19. Use of a dual-component system as defined in claims 1 to 17 as a sealing material.

20. Use of a dual-component system as defined in claims 1 to 17 for making gluing works.

## Patentansprüche

1. Zweikomponentensystem, das einen Teil A auf der Basis von retardiertem Tonerdezement in wässriger Phase und einen Teil B in wässriger Phase zur Einleitung der Härtung umfasst, wobei der Teil A weiterhin Borsäure oder eines ihrer Salze, wenigstens ein Fließmittel (Superplasticizer) und Wasser umfasst und der Teil B einen Starter und Wasser umfasst, **dadurch gekennzeichnet, dass**:
a) der Starter ausschließlich aus Lithiumsalzen besteht und ein Gemisch aus Lithiumhydroxid und wenigstens einem anderen wasserlöslichen Lithiumsalz, vorzugsweise einem Lithiumsulfat oder -carbonat, umfasst;
b) die Gesamtmasse des Elements Lithium (Li) in Teil B soviel beträgt, dass sie nach Mischung mit Teil A im Bereich von 0,5 bis 2 Gew.-% liegt, bezogen auf das Gewicht des Tonerdezements in Teil A, vorzugsweise 0,8 bis 1,3 Gew.-%; und
c) die Masse des Elements Lithium (Li) in Teil B, die das Lithiumhydroxid beiträgt, soviel beträgt, dass sie nach Mischung mit Teil A im Bereich von 0,1 bis 1 Gew.-% liegt, bezogen auf das Gewicht des Tonerdezements in Teil A, vorzugsweise 0,15 bis 0,4 Gew.-%.

2. Zweikomponentensystem gemäß Anspruch 1, **dadurch gekennzeichnet, dass** die Teile A und B weiterhin mineralische Füllstoffe umfassen,

3. Zweikomponentensystem gemäß Anspruch 1 oder 2, **dadurch gekennzeichnet, dass** man nach Mischung der beiden Teile eine nach dem Vicat-Nadelverfahren gemessene Abbindezeit von weniger als 5 Minuten erhält.

4. Zweikomponentensystem gemäß einem der vorstehenden Ansprüche, **dadurch gekennzeichnet, dass** das durch Mischen der Teile A und B erhaltene Produkt eine mechanische Druckfestigkeit von wenigstens 5 MPa in 15 Minuten und vorzugsweise wenigstens 10 MPa in 15 Minuten erreicht.

5. Zweikomponentensystem gemäß einem der vorstehenden Ansprüche, **dadurch gekennzeichnet, dass** die Zusammensetzung des Teils A wie folgt ist, in Gew,-%:
- 60 bis 80 Gew.-% Tonerdezement;
- 1 bis 3 Gew.-% Borsäure oder eines ihrer Salze;
- 5 bis 10 Gew.-% mineralische Füllstoffe;
- 1 bis 5 Gew.-% Fließmittel;
- 13 bis 18 Gew.-% Wasser.

6. Zweikomponentensystem gemäß einem der vorstehenden Ansprüche, **dadurch gekennzeichnet, dass** die Zusammensetzung des Teils B wie folgt ist, in Gew.-%:
- 2,5 bis 6,5 Gew.-% wasserfreies Lithiumsulfat (Li₂SO₄);
- 0,4 bis 1 Gew.-% wasserfreies Lithiumhydroxid (LiOH);
- 75 bis 90 Gew.-% mineralische Füllstoffe;
- 5 bis 15 Gew.-% Wasser.

7. Zweikomponentensystem gemäß einem der vorstehenden Ansprüche, **dadurch gekennzeichnet, dass** das Gewichtsverhältnis zwischen Teil A und Teil B (A/B) im Bereich von 2/1 bis 1/2 liegt und vorzugsweise 1/1 beiträgt.

8. Zweikomponentensystem gemäß einem der vorstehenden Ansprüche, **dadurch gekennzeichnet, dass** die Borsäure oder ihr Salz einen Anteil im Bereich von 1 bis 3 Gew.-%, vorzugsweise 1 bis 2,3 Gew.-% und besonders bevorzugt 2 Gew.-% ausmacht, bezogen auf das Gesamtgewicht des Tonerdezements.

9. Zweikomponentensystem gemäß einem der vorstehenden Ansprüche, **dadurch gekennzeichnet, dass** das Zweikomponentensystem höchstens 5 Gew.-% organische Verbindung umfasst.

10. Zweikomponentensystem gemäß einem der vorstehenden Ansprüche, **dadurch gekennzeichnet, dass** der Anteil an Lithiumhydroxid in Teil B kleiner als 1 Gew.-% ist.

11. Zweikomponentensystem gemäß einem der vorstehenden Ansprüche, **dadurch gekennzeichnet, dass** die Teile A und B in Form einer Paste vorliegen.

12. Zweikomponentensystem gemäß einem der vorstehenden Ansprüche, **dadurch gekennzeichnet, dass** die Füllstoffe des Teils A einen maximalen Teilchendurchmesser von weniger als 5 µm haben und wenigstens 80 Gew,-% der Füllstoffteilchen des Teils B einen minimalen Teilchendurchmesser von größer oder gleich 100 µm haben.

13. Zweikomponentensystem gemäß einem der vorstehenden Ansprüche, **dadurch gekennzeichnet, dass** die Füllstoffe des Teils A aus Quarzstaub und/oder einem Füller ausgewählt sind.

14. Zweikomponentensystem gemäß einem der vorstehenden Ansprüche, **dadurch gekennzeichnet, dass** die Füllstoffe des Teils A und B seinen maximalen Durchmesser (Dmax) von 1 mm haben.

15. Zweikomponentensystem gemäß einem der vorstehenden Ansprüche, **dadurch gekennzeichnet, dass** die Anteile des Wassers in den beiden Teilen so gewählt sind, dass das Gewichtsverhältnis Wasser zu Tonerdezement (E/CAC) in dem durch Mischen der Teile A und B erhaltenen Produkt kleiner als 0,65, vorzugsweise kleiner als 0,4, ist.

16. Zweikomponentensystem gemäß einem der vorstehenden Ansprüche, **dadurch gekennzeichnet, dass** der pH-Wert des durch Mischen der Teile A und B erhaltenen Produkts größer als 12 ist.

17. Zweikomponentensystem gemäß einem der vorstehenden Ansprüche, **dadurch gekennzeichnet, dass** die Teile A und B eine Lebensdauer von wenigstens sechs Monaten haben.

18. Zweikomponentenkapsel, die einen Teil A auf der Basis von retardiertem Tonerdezement und einen Teil B zur Einleitung der Härtung umfasst, **dadurch gekennzeichnet, dass** die Teile A und B wie in den Ansprüchen 1 bis 17 definiert sind.

19. Verwendung eines Zweikomponentensystems gemäß den Ansprüchen 1 bis 17 als Dichtungsmittel.

20. Verwendung eines Zweikomponentensystems gemäß den Ansprüchen 1 bis 17 zur Durchführung von Klebearbeiten.
